# EUROPEAN PATENT SPECIFICATION

(11) **EP 0 680 804 B1**
(45) Date of publication and mention of the grant of the patent: **29.07.1998**
(21) Application number: 95610024.2
(22) Date of filing: 03.05.1995
(51) Int. Cl.: B23K 26/00

(54) **A method of processing oxide materials by means of a laser beam**
Verfahren zur Bearbeitung von oxidischen Materialien mittels eines Laserstrahls
Procédé de traitement de matériaux oxydes au moyen d'un faisceau laser

(30) Priority: 03.05.1994 DK 50394; 20.10.1994 DK 121994
(43) Date of publication of application: 08.11.1995
(73) Proprietor: THE WHITAKER CORPORATION, Wilmington, Delaware 19808 (US)
(72) Inventor: Christensen, Frank, DK-2100 Copenhagen O (DK); Müllenborn, Matthias, DK-2800 Lyngby (DK)
(74) Representative: Siiger, Joergen

(56) References cited:
- EP-A- 0 391 848
- DE-A- 3 718 323
- US-A- 4 838 989
- PATENT ABSTRACTS OF JAPAN vol. 12 no. 33 (C-472) ,30 January 1988 & JP-A-62 180088 (NEC CORP) 7 August 1987,
- DATABASE WPI Section Ch, Week 8730 Derwent Publications Ltd., London, GB; Class L03, AN 87-209798 & JP-A-62 136 578 ( NEC CORP) , 19 June 1987
- CHEMICAL ABSTRACTS, vol. 119, no. 6, 9 August 1993 Columbus, Ohio, US; abstract no. 54609z, page 339; & JP-A-04 357 133 (SEIKOSHA CO LTD) 10 December 1992
- APPLIED PHYSICS LETTERS, vol. 50, no. 21, 1987 pages 1491-1493, R.W. DREYFUS ET AL

## Description

The invention relates to a method of processing bodies of oxide materials by means of a CW-laser beam which is absorbed by the material.

The method is intended to be used for the provision of well-defined, three-dimensional structures in oxide materials. One of the materials to be processed is LiNbO₃. Commercially available LiNbO₃ is piezoelectric with a complex crystal structure, as inter alia the ratio between Li and Nb usually deviates from the stoichiometric ratio of 1:1. The material is an insulator having a band gap of approximately 3.7 eV at 300°K. However, the band structure is not known in details. The material has various possible applications, as the optical as well as the piezoelectric properties may be utilized. As it hitherto has proved extremely difficult to process said material, (i.e. to selectively remove the material from a well-defined area of a substrate surface), new methods having considerably increased removal rates may be of great importance.

Table 1 shows the removal rates for some of the known processing methods.

**Table 1**

| Method | Typical Rate | Remarks |
|---|---|---|
| Conventional wet etching HF, KOH, etc. | 10 Å/min | Poor resolution Anisotropy |
| Ion-accelerated wet etching | 2-300 Å/min | Depends on the damage profile |
| Gas ion milling (Ar). | 2-300 Å/min | Requires thick mask layers |
| Reactive ion beam etching (RIBE) | 1-300 Å/min | Requires thick mask layers |
| Reactive ion etching (RIE) | 10-100 Å/min | Generally, a slow process |

It appears that the removal rates for these methods are less than 50 Å/sec.. Processing the material with one of these methods is therefore very time-demanding. However, the above methods may be used for parallel processing, that is simultaneous processing of an entire wafer.

Moreover, processing methods are known based on the application of UV-laser light, laser ablation and laser-induced etching.

In Table 2 results hitherto obtained by means of these methods are stated.

**Table 2**

| Method | Typical etching rate | Remarks |
|---|---|---|
| Laser-induced chemical (KF powder) etching | 300 Å/sec. corres. to 1350 µm³/sec. | Spot size 150x 300 µm 10 Hz pulsed laser (KrF 248 nm) |
| Laser ablation | 1.000 Å/sec. | As above |
| | 10.000 Å/sec. corres. to 4500 µm³/sec and 15500 µm³/sec, respectively. | Various spot sizes 10 Hz pulsed laser (XeCl 308 nm) |
| Laser-induced chemical (Cl₂-gas) etching | 800 Å/sec. corresp. to 0.250 µm³/sec. | Spot size 1.5 µm CW-laser (fd Ar-ion 257 nm) scanning rate 0.5 - 10 µm/sec. |

It is evident that the etching rate for the CW-laser is many orders of magnitude lower than for the pulsed lasers. This is due to the fact that the pulsed lasers expose a substantially larger area, which, however, results in a substantially poorer resolution. Combining a high etching rate and a high resolution is thus not possible when using the methods stated in Table 2. The difficulty in obtaining the necessary total power/energy for the CW-laser and the pulsed laser, respectively, is a common feature of the three methods stated in Table 2. This difficulty can be explained by the fact that according to general opinion it is necessary to use lasers, which have a photon energy exceeding the band gap of LiNbO₃ in order to obtain a sufficiently high absorption. However, it is very difficult to obtain large powers at low wavelengths (less than 330 nm), where the optics, moreover, becomes an increasing problem. The highest obtainable laser power of a CW-laser with a photon energy larger than band gap, is obtained by means of a frequency doubled Ar-ion-laser (257 nm) providing an output of approximately 300 mW.

The object of the invention is to provide a method of processing bodies of oxide materials by means of a laser beam enabling a more accurate etching and a higher etching rate than hitherto known.

A method of the above type is according to the invention characterised in that the used laser beam has a wavelength corresponding to a quantum energy being less than the band gap of the material, a predetermined initial output being required to initiate the processing and subsequently a minimum continuous maintenance output per area unit. Initially, it might be expected that no absorption would take place. However, experience has shown that different energy levels in the band gap may be utilized. These energy levels are apparently caused by several types of structural defects and imperfections in the crystal. Each of these defects and imperfections results in different energy levels in the band gap of the material, and some enable an absorption of photons, the energy of which being less than the band gap energy. Once excited by the photons, the electrons quickly relax, supplying energy to the crystal lattice in the process. This causes the crystal to be heated. If the absorption coefficient is temperature sensitive, this may lead to the band gap energy being less than the photon energy. Subsequent hereto, the photons are absorbed without any difficulties, and an ablation or an etching process may then be initiated in a controllable manner. Moreover, as a result of the lower photon energy, a laser with a higher power may be used.

German published specification No. 3.718.323 discloses a method for surface processing of oxide materials by means of a laser beam. It is stated in the publication that the quantum energy is to be greater than a predetermined value. A threshold value of 3 eV is mentioned, corresponding to the band gap of barium titanate, which is one of the materials mentioned in the publication.

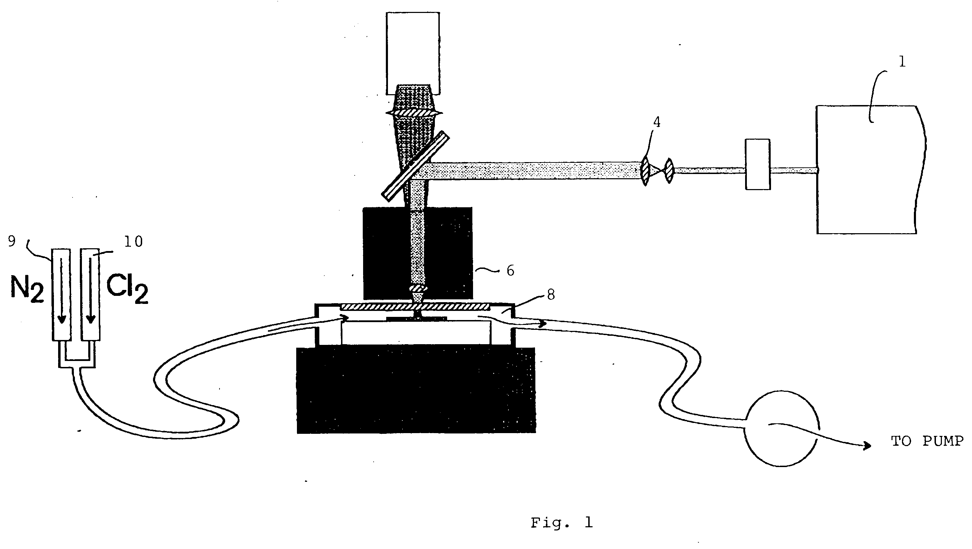

The invention is explained in greater detail below with reference to the accompanying drawings, in which
Figure 1 illustrates an apparatus for processing bodies of oxide materials by means of a laser beams, and
Figure 2-6 illustrate the results of the processing.

According to the invention, the processing of a body of an oxide material, for instance in form of a piezoelectric material, is carried out by means of UV-laser light having a photon energy being less than the band gap of the material, whereby the use of an ordinary commercially available Ar-ion-laser or a Kr-ion-laser is possible, thereby utilizing the substantially higher CW laser outputs (> 1W) available at these wavelengths. Furthermore, it is possible to combine a high accuracy with a considerably higher scanning rate than hitherto known. All things considered, substantially higher removal rates than previously are obtained, as the removal rates of more than 100,000 µm³/sec together with a fair resolution can be obtained by means of the invention. The material may be processed in a controllable manner using 351 as well as 364 nm laser light. A minimum output per area unit of approximately 150 kW/cm² is required in order to maintain the process. At 488 nm, however, the process cannot be controlled, because of the high laser powers required to maintain the process once it has been initiated.

The material used may for instance be LiNbO₃, corresponding to a Li:Nb ratio different from 1. The crystal has probably several types of structural defects. Each of these defects results in different energy levels in the band gap of the material, and some enable an absorption of photons, the energy of which being less than the band gap. The photon absorption and the subsequent relaxation process supply energy and momentum to the crystal lattice. As a result, the crystal is heated, said crystal having a temperature-dependent absorption coefficient. This may lead to the energy gap being less than the used photon energy. Subsequent hereto, the photons are absorbed without any difficulties, whereafter an ablation or etching process may be initiated, and the process may be carried out in a controllable manner.

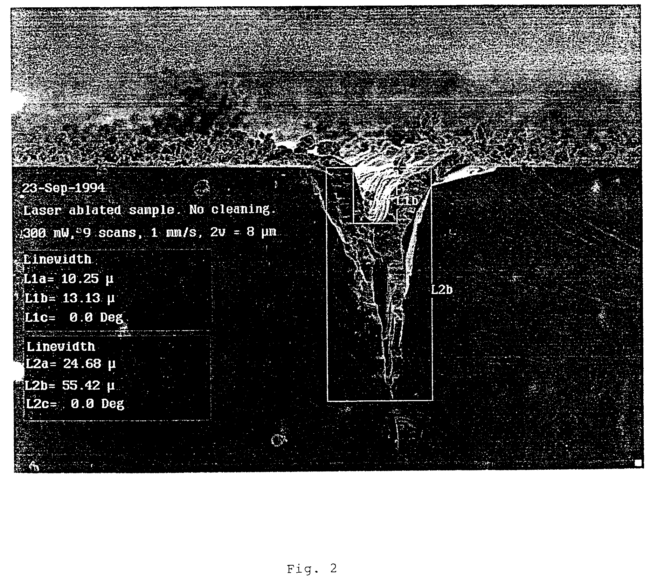

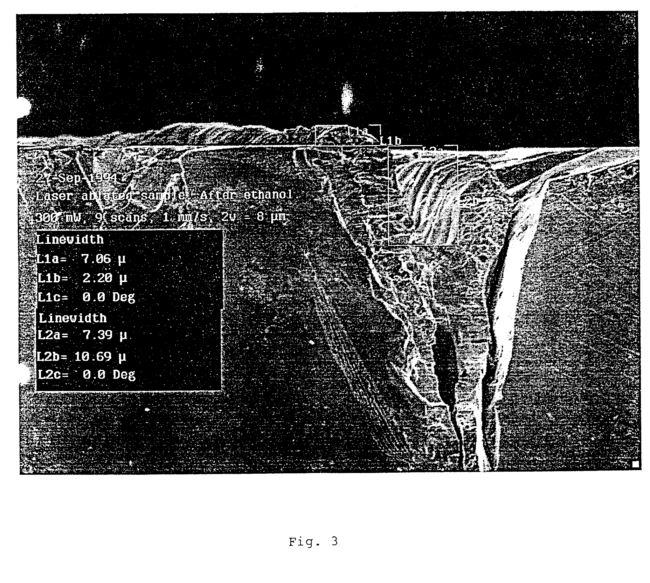

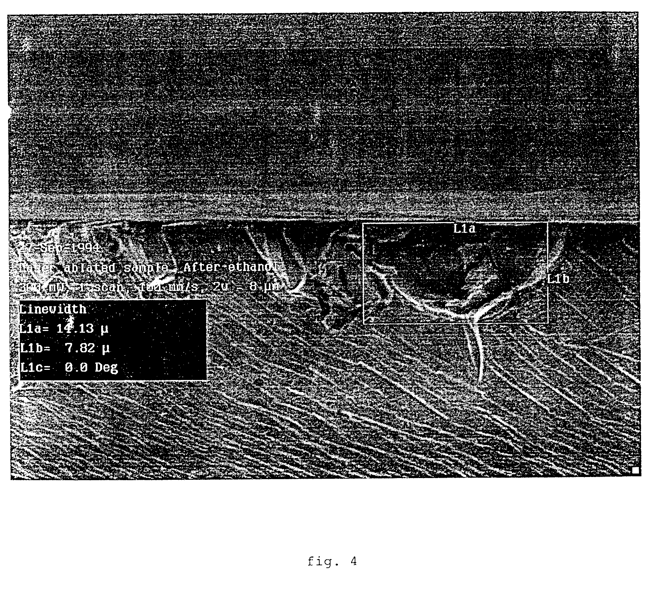

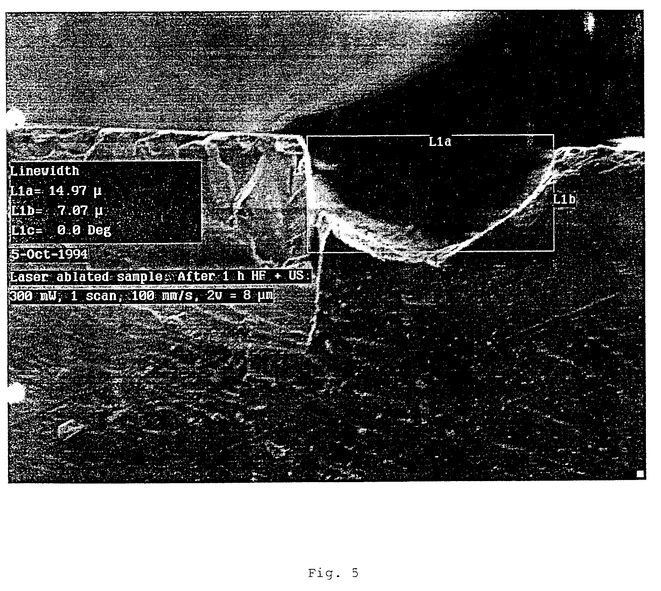

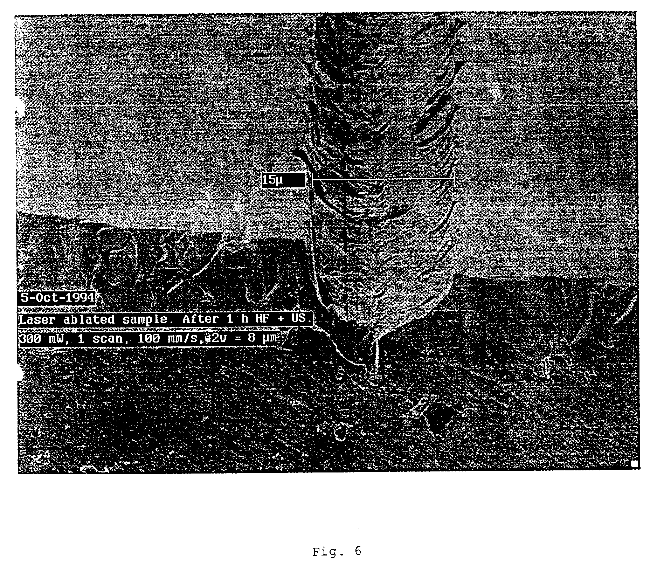

Subjecting a lithium niobate substrate to the laser process results in redeposits on the substrate surface surrounding the area exposed by the laser. The redeposited material has been ablated or evaporated away from the exposed area. This is illustrated in Figure 2 showing a SEM picture of a sample subsequent to the laser ablation process. The redeposited material is easily removed by means of ethanol, as it appears from Figure 3. Figure 4 shows that a comparatively large zone of material is still present, said material having another structure, probably amorphous, than the untreated substrate. If the sample is then treated with a possibly heated, strong acid (such as HF) or a base (such as KOH or NaOH) possibly combined with ultrasound, this zone may be completely removed, whereafter the pure substrate is remains. This is evident from Figures 4 to 6, which also show that by means of this process, it is possible to obtain removal rates of more than 10 x 16⁶µm³/sec. In this calculation, the duration of the postprocessing has not been taken into account, as partly this is far from optimised and partly as this enables parallel processing.

A comparison with the result of the typical removal rate of approximately 100 Å/min. for the methods in Table 1, it appears that the following applies for a 4" wafer, if a 7 µm thick layer is to be removed from the surface (a 4" wafer has a usable area of approximately 70 cm²):

**Table 3**

| % of total surface area | Standard process | Laser ablation |
|---|---|---|
| 100 | approx. 12 hours | approx. 1.5 hour |
| 50 | approx. 12 hours | approx. 45 min. |
| 10 | approx. 12 hours | approx. 10 min. |
| 5 | approx. 12 hours | approx. 25 min. |
| 1 | approx. 12 hours | approx. 1 min. |

Table 3 shows that as the processed area decreases, the faster the laser process is relative to a standard process.

Laser-assisted etching may presumably be performed with a number of different gasses, such as chlorine and fluorine, being the most aggressive, fluids HF, KOH, etc. and solid matter, such as KF.

Since the band gap of LinbO₃'s is highly temperature-sensitive, the necessary free electrons may be generated by exposing the material with a dim UV light source having a photon energy being higher than the band gap, or merely by heating the material by means of a hot plate and subsequent thereto processing it with a suitably strong laser beam below the band gap energy.

The entire arrangement is placed on a Newport optical table research series plus. The arrangement comprises an argon-ion-laser 1 of the type Coherent Innova 400-20. The laser 1 may operated at the wavelengths 514.5 nm, 488 nm, 457.9 nm, 364 nm, and 351 nm. These wavelengths correspond to a photon energy less than the band gap of lithium niobate at 300°K. In order to obtain a reproducible laser beam to be focused on the surface of the sample, a number of optical components are arranged successive to the laser 1.

The first component is a mirror of the type optics for Research, MYU-25-UV7 followed by a beam expander 4 comprising two lenses having a predetermined distance. The first lens is of the type LLU-25-63 N-A4, while the second lens is of the type LLU-25-190-A3. Two mirrors are next in line mounted on a damped rod, whereby the resolution may be increased during a laser-assisted etching in e.g. Si. The mirrors are of the type MYU-25-UV7. Then follows a lens 6, Optics for Research LLU-25-80-A1, focusing on the sample. The minimum obtainable spot size by means of this lens is approx. 8 µm, the heated area, however, corresponds to a spot size of approx. 20 µm.

A spot size on 1/2-1 µm (for 351 nm) can be obtained by substituting the lens with a microscope objective of the type Ealing Electro-optics 25-0522.

The sample is placed in a vacuum-sealed chamber 8 made of stainless steel and provided with a 1.5 mm thick quartz window. The distance between the sample and the window is approximately 3 mm.

For obtaining an optimum focusing of the beam on the surface of the sample, the focusing lens 6 is mounted on a Newport Z-stage, PM500 mini stage. In turn, this Z-stage is mounted on an arrangement of shock-absorbing rods and the like. The Z-stage can be adjusted with an accuracy of 25 nm and has a maximum scan length of 1 inch.

The process chamber 8 is attached to a Newport X-Y-stage, PM500 regular, also adjustable with an accuracy of 25 nm and having a maximum scan length of 4 inches. This X-Y-stage can be moved at a rate from 0.1 µm/sec to 100mm/sec, and said Z-stage and X-Y-stage may be computerized.

The process chamber 8 is connected with a nitrogen source 9 and a chlorine source 10. The chamber 8 may, if desired, be closed during processing or a gas may flow therethrough.The maximum gas flux is 10 sccm. As the atmospheric pressure secures the quartz window, the maximum chlorine gas pressure is approximately 750 mbar. However, such a chlorine gas pressure is inconvenient, as the gas absorbs some of the laser light at wavelengths of about 351 nm. Such a high pressure is not necessary to obtain high removal rates.

Other oxide materials which also may be processed by means of CW-laser light having a photon energy less than the band gap energy are:

| Chemical formula | Designation | band gap at 300°K |
|---|---|---|
| * LiTaO₃ | lithium tantalate | approx. 3.3 eV |
| * Li₂B₄0₇ | lithium tetraborate | ? |
| BaTiO₃ | barium titanate | approx. 3.1 eV |
| * AlPO₄ | berlinite | ? |
| *Bi₁₂GeO₂₀ | bismuth germanium oxide | ? |
| CaTiO₃ | calcium titanate | ? |
| KNbO₃ | potassium niobate | approx. 3.3 eV |
| KTaO₃ | potassium tantalate | approx. 3.6 eV |
| SrTiO₃ | strontium titanate | approx. 3.2 eV |
| TiO₂ | rutile | approx. 3.2 eV |
| * ZnO | zinc oxide | approx. 3.4 eV |

Generally, the material ABO₃, wherein A is an alkali or an alkaline earth metal and B is an transition metal, may be processed by means of a CW-laser light with a photon energy being less than the band gap energy.

As a rule, an Ar-ion-laser on 351/364 nm or a Kr-ion-laser (330 nm) is used.

The compounds marked with a * may as an example be used in SAW apparatuses (surface acoustic wave devices).

## Claims

1. A method of processing bodies of oxide materials by means of a CW-laser beam absorbed by the material, wherein the used laser beam has a wavelength corresponding to a quantum energy being less than the band gap of the material, a predetermined initial output being required to initiate the processing and subsequently a minimum continuous maintenance output per area unit.

2. A method as claimed in claim 1, **characterised** in that the minimum maintenance output per area unit is approximately 150 kW/cm².

3. A method as claimed in claim 1, **characterised** in that the used oxide material is a piezoelectric material with perovskite-like or spinel structure.

4. A method as claimed in claim 3, **characterised** in that the used piezoelectric material is LiNbO₃ in a non-stoichiometric form, and possibly inhomogeneous.

5. A method as claimed in claim 3, **characterised** in that the used piezoelectric oxide material has the formula ABO₃, wherein A is an alkali or an alkaline earth metal and B is a transition metal.

6. A method as claimed in one or more of the claims 1-4, **characterised** in that the used laser beam has a wavelength of at least 330 nm.

## Patentansprüche

1. Verfahren zur Bearbeitung von Körpern aus oxidischen Materialien mittels eines von dem Material absorbierten Dauerstrich-Laserstrahls, bei dem der eingesetzte Laserstrahl eine solche Wellenlänge aufweist, daß die entsprechende Quantenenergie geringer ist als der Bandabstand des Materials, und wobei eine vorgegebene Anfangsausgangsleistung zum Ingangbringen der Bearbeitung und dann eine Mindest-Daueringanghalteleistung je Flächeneinheit erforderlich ist.

2. Verfahren nach Anspruch 1, dadurch gekennzeichnet, daß die Mindest-Inganghalteleistung je Flächeneinheit etwa 150 kW/cm² beträgt.

3. Verfahren nach Anspruch 1, dadurch gekennzeichnet, daß es sich bei dem eingesetzten oxidischen Material um ein piezoelektrisches Material mit perowskitartiger Struktur oder Spinellstruktur handelt.

4. Verfahren nach Anspruch 3, dadurch gekennzeichnet, daß es sich bei dem eingesetzten piezoelektrischen Material um in nichtstöchiometrischer Form vorliegendes und möglicherweise inhomogenes LiNbO₃ handelt.

5. Verfahren nach Anspruch 3, dadurch gekennzeichnet, daß das eingesetzte piezoelektrische oxidische Material die Formel ABO₃ aufweist, in der A ein Alkalimetall oder Erdalkalimetall und B ein Übergangsmetall darstellt.

6. Verfahren nach einem oder mehreren der Ansprüche 1-4, dadurch gekennzeichnet, daß der eingesetzte Laserstrahl eine Wellenlänge von mindestens 330 nm aufweist.

## Revendications

1. Procédé de traitement de corps en matériaux oxydes au moyen d'un faisceau laser continu absorbé par le matériau, dans lequel le faisceau laser utilisé possède une longueur d'onde correspondant à une énergie quantique inférieure à la largeur de bande interdite du matériau, une puissance initiale prédéterminée étant nécessaire pour amorcer le traitement, suivie d'une puissance d'entretien continue minimale par unité de surface.

2. Procédé selon la revendication 1, caractérisé en ce que la puissance d'entretien minimale par unité de surface est d'environ 150 kW/cm².

3. Procédé selon la revendication 1, caractérisé en ce que le matériau oxyde utilisé est un matériau piézo-électrique de structure spinelle ou de type perovskite.

4. Procédé selon la revendication 3, caractérisé en ce que le matériau piézo-électrique utilisé est LiNbO₃ sous une forme non stoechiométrique, et éventuellement non homogène.

5. Procédé selon la revendication 3, caractérisé en ce que le matériau piézo-électrique utilisé a pour formule ABO₃, dans laquelle A est un métal alcalin ou alcalino-terreux et B est un métal de transition.

6. Procédé selon l'une ou plusieurs des revendications 1-4, caractérisé en ce que le faisceau laser utilisé possède une longueur d'onde d'au moins 330 nm.
